# EUROPEAN PATENT SPECIFICATION

(11) **EP 1 942 015 B1**
(45) Date of publication and mention of the grant of the patent: **14.04.2010**
(21) Application number: 06811045.1
(22) Date of filing: 02.10.2006
(51) Int. Cl.: B60C 11/04, B60C 5/00, B60C 11/13

(54) **PNEUMATIC TIRE FOR BICYCLE**
LUFTREIFEN FÜR EIN FAHRRAD
PNEU POUR BICYCLETTE

(30) Priority: 03.10.2005 JP 2005289606
(43) Date of publication of application: 09.07.2008
(73) Proprietor: Bridgestone Corporation, Tokyo 104-8340 (JP)
(72) Inventor: ISHIYAMA, Makoto BRIDGESTONE CORPORATION, Kodaira-shi Tokyo 187-8531 (JP)
(74) Representative: Whalley, Kevin
(86) International application number: PCT/JP2006/319697
(87) International publication number: WO 2007/040202

(56) References cited:
- JP-A- 02 133 206
- JP-A- 07 329 514
- JP-A- 10 067 207
- JP-A- 10 081 111
- JP-A- 2003 211 917
- JP-U- 62 174 905

## Description

### TECHNICAL FIELD

The present invention relates to a pneumatic tire for a motorcycle having a designated tire rotational direction, which is capable of improving driving performance or braking performance.

### RELATED ART

Conventionally, as a pneumatic tire for a motorcycle having a designated tire rotational direction which can improve driving performance together with turning performance and whose rotational direction is prescribed, a tire disclosed in, for example, Japanese Patent Application Laid-open No. 2003-146017 is known.

The disclosed tire includes, in its tread portion, block rows composed of a plurality of blocks which are defined by inclined longitudinal grooves inclining with respect to a tire circumferential line and inclined lateral grooves inclining with respect to a tire axial line and which are arranged in a circumferential direction of a tire. The inclined longitudinal grooves incline at an angle α more than 10° and less than 45° relative to the tire circumferential line with the angle flaring in the tire rotational direction. At the same time, the inclined lateral grooves incline at an angle β more than 10° and less than 45° relative to the tire circumferential line with an outside in the tire axial direction being in the tire rotational direction. Furthermore, a summation of the angles α+β is more than 20° and less than 55°.

In a motorcycle, rotational driving force from an engine is transmitted only to a rear wheel, so that driving performance is important for a tire mounted onto the rear wheel. However, when the tire as described above is mounted onto a rear wheel of a motorcycle, and then, is driven to run, each block receives a sum of component force of driving force and turning force, both of which affect on respective adjacent two block walls of the block. Therefore, both of driving performance and turning performance improve, and accordingly, become suitable of a rear wheel.

Japanese Utility Model Application No. 63327/1986, JP-A-7-329514, JP-A-2-132286 and JP-A-2003-211917 disclose pneumatic tires for two wheeled vehicles according to the prior art.

### DISCLOSURE OF THE INVENTION

### PROBLEMS TO BE SOLVED BY THE INVENTION

Such conventional pneumatic tire for a motorcycle is capable of improving driving performance to a certain extent. However, when such tire is mounted onto a motorcycle whose performance has been dramatically improved in these days and which ran on a general road, or onto a motorcycle for a racing, a problem remains unsolved where the tire has insufficient driving performance. Furthermore, a problem also remains unsolved where the tire should be a block-typed one that both a longitudinal groove and a lateral groove are formed on the tread portion, and accordingly, its applicable range is narrow.

### MEANS FOR SOLVING THE PROBLEM

For this reason, regarding a pneumatic tire for a motorcycle rear wheel having wide applicable range, wherein even when any longitudinal groove is not formed on an outer surface of the tread portion, a forming of plural grooves on the outer surface of the tread portion, each having an inclined portion inclined at an inclination angle within the range of 45-90° with respect to a tire equator S, leads to sufficiency, the inventor has diligently studied a behavior during accelerated running of tread rubber of a region provided with an inclined portion to obtain the following perception.

That is, at a land portion in a ground-contact area during accelerated running, circumferential shear deformation heading backwardly in a rotational direction affects on a region contacting a road surface, whereas circumferential shear deformation shifting forwardly in a rotational direction affects on a region contacting a belt layer which is an internal structure member of the tread portion. However, when the grooves, each having the inclined portion inclined at the inclination angle within the range of 45-90° with respect to the tire equator S, are formed at the tread portion as described above, the entire land portion between the inclined portions of the grooves leans backwardly in a rotational direction with its groove bottom as a base end due to the above-mentioned shear deformation.

When the entire land portion between the inclined portions (grooves) inclines backwardly in a rotational direction during accelerated running of the rear tire as described above, ground-contact area between the land portion and the road surface decreases to decline grip force during driving declines, and accordingly, driving performance declined while ground-contact pressure becomes nonuniform, thereby generating uneven wear. For this reason, the inventor has further studied to obtain a perception that in order to strongly resist the leaning as described above, the entire inclined portion (groove) is inclined in a reverse direction compared with the inclining direction.

The invention according to claim 1 has been accomplished based on the perception as described above, and provides a first aspect of the invention.

Meanwhile, a vehicle body of a motorcycle inclines (pitches) such that the front wheel of the motorcycle sinks down during braking, so the front wheel bears a greater load and mainly contributes to breaking. The inventor has also diligently studied a behavior of tread rubber of the tire for the front wheel in such a state to obtain the following perception. That is, because a land potion between grooves (inclined portion) at a ground-contact area during braking is deformed in a shear manner in a direction opposed to the above-mentioned direction, its entirety leans forwardly in a rotational direction with its groove bottom as a base end. Therefore, in order to strongly resist the leaning of the land portion in the tire for the front wheel subjected to great braking force, entire inclined portion (groove) is inclined in a direction opposed to the inclining direction in a similar manner.

The invention according to claim 2 has been accomplished based on the perception as described above, and provides a second aspect of the invention.
A third aspect of the invention is provided in claim 8.

In the invention according to claim 1, the inclined portion of the groove on the circumferential cross-section is generally inclined from the deepest point D toward the opening end K forwardly in a rotational direction. Accordingly, even when the entire land portion between the inclined portions (grooves) is about to lean backwardly in the rotational direction during accelerated running, a support portion, having a generally triangular shape and being formed at a rear end in the rotational direction of the respective land portions, strongly resists the leaning, thereby effectively restraining the respective land portions from leaning. This increases a ground-contact area between the land portion and a road surface to improve grip force during driving. Accordingly, driving performance is improved while ground-contact pressure is equalized, thereby suppressing non-uniform wear. Furthermore, because a longitudinal groove extending in a substantially circumferential direction is not an indispensable element in this tire, it is widely applicable.

Additionally, in the invention according to claim 2, the inclined portion of the groove on the circumferential cross-section is generally inclined from the deepest point D toward the opening end K backwardly in the rotational direction. Accordingly, even when the entire land portion between the inclined portions (grooves) is about to lean forwardly in a rotational direction during braking, a support portion, having a substantially triangular shape and being formed at a front end in the rotational direction of the respective land portions, strongly resists the leaning, thereby effectively suppressing the leaning of the respective land portions. This increases braking performance similarly and suppresses non-uniform wear as well. Furthermore, because a longitudinal groove extending in a substantially circumferential direction is not an indispensable element also in this tire, it is widely applicable.

Further, a vehicle body of a motorcycle greatly inclines during turning, only a tread end portion of the motorcycle pneumatic tire contacts the ground while great lateral force affects on the tread end portion. However, when an inclined portion placed at the tread end portion is a groove inclined at the inclination angle A of 45-90° with respect to the tire equator S as described in claim 3, the land portion positioned at the tread end portion extends generally in the width direction to strongly resist the lateral force as described above, thereby effectively suppressing the leaning of the land portion.

This increases the ground-contact area to effectively improve turning performance of the tire while effectively suppressing non-uniform wear. Especially when acceleration is performed during turning, both lateral force and driving force affect the tread end portion of the tire. However, in the invention according to claim 3 dependent from claim 1, because both turning performance and driving performance can be improved, sufficient grip force can be obtained in the above-mentioned case. On the other hand, when a deceleration is performed during turning, both lateral force and braking force affect the tread end portion of the tire. However, in the invention according to claim 3 dependent from claim 2, because both turning performance and braking performance can be improved, sufficient grip force can be obtained in the above-mentioned case.

In addition, with the tire structured according to claim 4, a vulcanization molding can be easily performed while maintaining driving and braking performance at a sufficient level, and at the same time, non-uniform wear can be effectively suppressed. Further, with the tire structured according to 5, the vulcanization molding can be easily performed, and at the same time, a negative ratio can be controlled to an adequate value while securing drainage performance. Additionally, with the tire structured according to the present invention, because the grooves are closed during ground-contact, drainage performance can be effectively improved while further improving driving, braking performance.

Furthermore, with the tire structured according to claim 6, an inclined portion of grooves can be simply formed with high accuracy. Additionally, with the tire structured according to claim 7, when a land portion is about to lean, front and back faces of the adjacent land portions in the rotational direction contact with each other in an engaged manner. Accordingly, the leaning of the land portion can be strongly suppressed.

### BRIEF DESCRIPTION OF THE DRAWINGS

[FIG. 1] FIG. 1 is a meridian cross-sectional view of a first embodiment according to the present invention.
[FIG. 2] FIG. 2 is a developed plan view of a tread portion.
[FIG. 3] FIG. 3 is a cross-sectional view as viewed from the direction of arrows I-I in FIG. 2.
[FIG. 4] FIG. 4 is a cross-sectional view similar to that in FIG. 2, but at the time of ground contact.
[FIG. 5] FIG. 5 is a cross-sectional view of another embodiment of an inclined portion similar to FIG. 3.
[FIG. 6] FIG. 6 is a meridian cross-sectional view of a second embodiment according to the present invention..
[FIG. 7] FIG. 7 is a developed plan view of a tread portion.
[FIG. 8] FIG. 8 is a cross-sectional view as viewed from the direction of arrows II-II in FIG. 7.
[FIG. 9] FIG. 9 is a cross-sectional view of another embodiment of an inclined portion similar to FIG. 8.
[FIG. 10] FIG. 10 is a cross-sectional view of another embodiment of an inclined portion similar to FIG. 8.
[FIG. 11] FIG. 11 is a cross-sectional view of another embodiment of an inclined portion similar to FIG. 8.
[FIG. 12] FIG. 12 is a graph showing a measurement result when a slip ratio has been changed.

### REFERENCE SYMBOLS

- 11: Pneumatic tire for motorcycle
- 13: Tread portion
- 19: Tread end portion
- 30, 31: Groove
- 32: Inclined portion

### BEST MODE FOR CARRYING OUT THE INVENTION

Hereinafter, a first embodiment according to the present invention will be discussed with reference to the accompanying drawings.

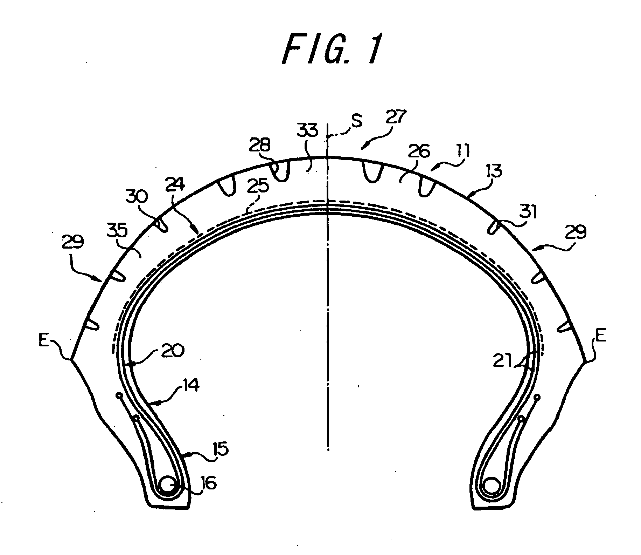

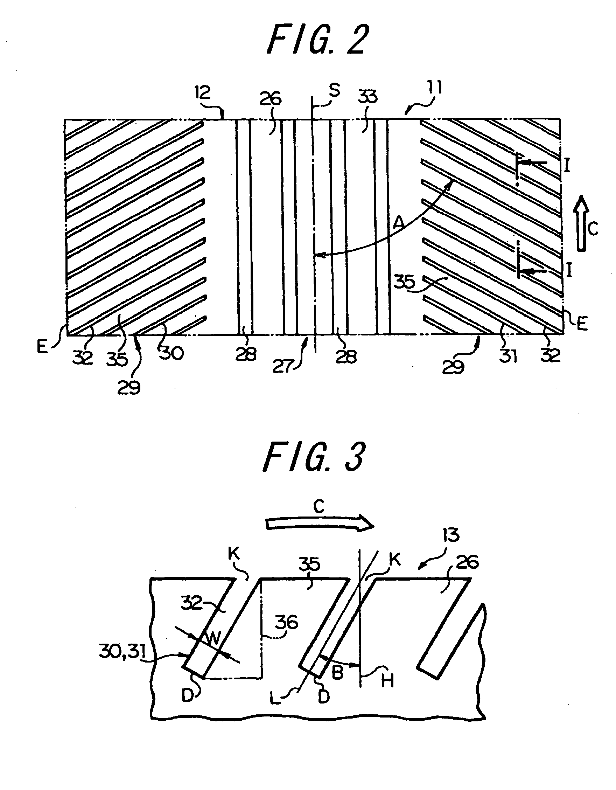

In FIGS. 1 and 2, a reference number "11" denotes a pneumatic tire for a motorcycle rear wheel having a designated tire rotation direction suitable for a high-speed running. The tire 11 comprises a tread portion 13 which smoothly curves in a convex manner outwardly in a radial direction while a meridian cross-section thereof draws a generally arcuate shape, a pair of side wall portions 14 which extend inwardly in a generally radial direction from both ends in a width direction of the tread portion 13, and a pair of bead portions 15 which are successive on inside ends in a radial direction of these side wall portions 14 and in each of which a bead core 16 is embedded. The tire 11 is formed in such a manner that a width between tread ends E is a tire maximum width.

Also, the tire 11 has a carcass layer 20 which toroidally extends between the pair of bead cores 16 to reinforce the side wall portion 14 and the tread portion 13. Both ends of the carcass layer 20 are turned back from inside to outside around the bead cores 16, thereby being anchored by the bead cores 16. The carcass layer 20 is composed of at least one sheet of, in this case, two sheets of carcass plies 21. A number of reinforcing cords which cross the tire equator S at a cord angle of 80° have been embedded in the carcass plies 21.

The reinforcing cords of the two carcass plies 21 mutually incline in opposite directions with respect to the tire equator S to cross each other. It should be noted that the above-mentioned reinforcing cord may extend at a cord angle of equal to or more than 70° with respect to the tire equator S, for example, 90° in a substantially radial direction (in a meridian direction). Additionally, although this case has employed nylon as the reinforcing cord, organic fiber such as rayon or polyester may be employed.

A numeral reference 24 denotes a belt layer which is placed outside of the carcass layer 20 in a radial direction and has a width substantially same as that of the tread portion 13. The belt layer 24 is formed by at least one sheet, in this case, one sheet of a circumferential ply 25. Each circumferential ply 25 is formed by spirally winding a strip, where one or more reinforcing element(s) is (are) embedded in coating rubber, generally along the tire equator S many times. As a result, the reinforcing element buried in the circumferential ply 25 extends in substantially parallel with the tire equator S, thereby exhibiting a strong hoop effect. This makes it possible to strongly restrain changes in a diameter growth and a ground-contacting shape of the tread portion 13 due to a centrifugal force during high-speed running, thereby improving steering stability and high-speed durability during straight running.

Here, when the circumferential ply 25 is formed by spirally winding therearound the strip many times as described above, the circumferential ply 25 can be easily manufactured at lower costs. In addition, as the above-mentioned reinforcing element, organic fiber such as nylon, rayon, polyester or aromatic polyamide or steel may be used. However, when a non-stretchable material such as aromatic polyamide or steel, which hardly stretches even under a high temperature, is employed, the hoop effect of the belt layer 24 can be effectively improved.

A reference numeral "26" denotes a tread rubber placed outside of the belt layer 24in a radial direction. A plurality of, in this case, four wide main grooves 28 extending continuously in a circumferential direction are formed at a tread central portion 27 on an outer surface of the tread rubber 26 (tread portion 13). When the plural main grooves 28 extending in a circumferential direction are formed at the tread central portion 27, which contacts the ground during straight running, as described above, a rib (land portion) 33 extending in a circumferential direction is defined between the main grooves 28. Such rib 33 extends in a circumferential direction as described above, thereby delivering high driving performance.

On the other hand, a plurality of grooves 30, 31 which are equally spaced apart from each other in a circumferential direction and are parallel with each other are respectively formed at both tread end portions 29 on the outer surface of the tread rubber 26 (tread portion 13). Each of the grooves 30, 31 has an inclined portion 32 where its opening end K inclines at an inclination angle within the range of 45-90°, in this case, at an inclination angle A of 60° with respect to the tire equator S. It should be noted that each inclination direction of the grooves 30, 31 (inclined portions 32) is a reverse direction at both sides of the tire equator S.

Here, in the present embodiment, although the grooves 30, 31 are so formed that the opening end K is entirely formed by the above-mentioned inclined portion 32, one portion of the opening end K may be formed by the inclined potion within the above-mentioned range, and the remaining portion may be formed to be inclined at an inclination angle less than 45° with respect to the tire equator S. When turning is performed after such tire 11 is mounted onto a motorcycle, the vehicle body is greatly banked. Accordingly, only the tread end 29 contacts the ground while a huge lateral force affects the tread end 29.

However, as described above, when grooves placed at the tread ends 29 are the grooves 30, 31 (inclined portion 32) each inclining at the inclination angle A within the range of 45-90° with respect to the tire equator S, the land portion 35 at the tread ends 29 defined by the grooves 30, 31 extends generally in a tire width direction, thereby strongly resisting the lateral force as described above and effectively suppressing the leaning of the land portion 35 in a width direction. This makes it possible to increase a ground-contact area to improve turning performance of the tire 11 while at the same time effectively suppressing non-uniform wear.

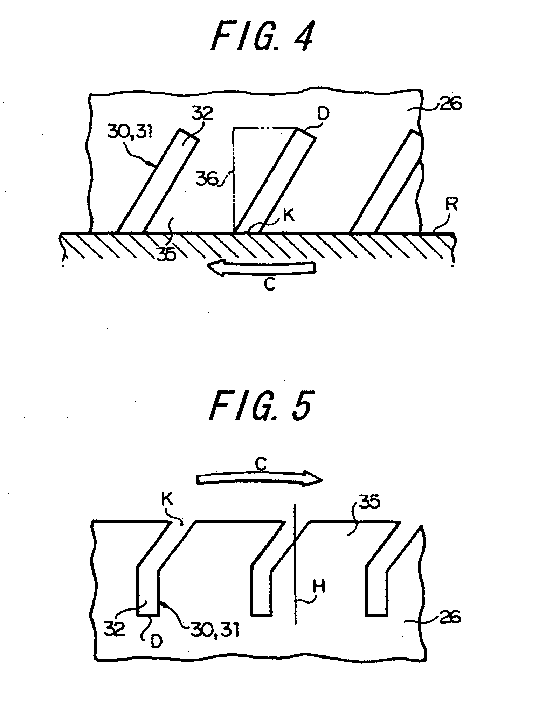

Also, in the present embodiment, when a circumferential cross-section of the tire 11 which passes through the inclination portion 32 of the grooves 30, 31 is taken along a plain surface perpendicular to the central axis of the tire 11, each of the grooves 30, 31, in particular, a central line in the width direction inclines forwardly in the rotation direction (the direction indicated by the arrow C in FIGS. 2 and 3) from the deepest point D toward the opening end K in its entirety, as shown in FIGS. 3, 4.

Accordingly, when a driving force is applied to the tire 11 mounted onto a rear wheel to accelerate the motorcycle, the land portion 35 is entirely about to lean backwardly in the rotational direction with the deepest point D as a base end due to shear deformation caused by the driving force. However, a generally triangular support portion 36 which is formed by the inclination at the rear end of each land portion 35 in the rotational direction strongly resists against such inclining, thereby effectively suppressing the leaning of each land portion 35.

This results in an increase of a ground-contact area between the land portion 35 and the road surface R to improve gripping force during a drive, thereby improving driving performance while at the same time equalizing ground-contact pressure to suppress non-uniform wear. Additionally, in the tire 11, because a longitudinal groove extending generally in the circumferential direction is not an indispensable element, it is widely applicable. Further, when the motorcycle equipped with the tire 11 is accelerated while turning, the vehicle body inclines to a great extent. Accordingly, both lateral force and driving force affect the tread ends 29 of the tire 11. However, as described above, when the inclination direction of the grooves 30, 31 (inclination portion 32) provided on the tread ends 29 on the circumferential cross-section is faced forward in a rotational direction, both turning performance and driving performance are improved. Accordingly, gripping force can be sufficiently secured.

Here, provided that a straight line L connects a widthwise central of the deepest point D of the inclined portion 32 (grooves 30, 31) and a widthwise central of the opening end K, and a normal line H, passes through a widthwise central of the opening end K of the inclined portion 32 (grooves 30, 31), a crossing angle B between the straight line L and the normal line H is preferably within the range of 5-40°.

The reason of this is as follows. In a case where the above-mentioned crossing angle B is less than 5°, the leaning of the land portion 35 backwardly in the rotational direction cannot be sufficiently suppressed. Accordingly, driving performance cannot be thoroughly improved. On the other hand, in a case where the above-mentioned crossing angle B exceeds 40°, a main bone structure and blades, both of which have been provided in a vulcanization mold in order to vulcanize mold the inclined portion 32, incline to a great extent. Accordingly, it is difficult to pull out the main bone structure and the blades. At the same time, the land portion 35 easily leans to make ground-contact pressure uneven due to weight of the vehicle body, resulting in a possible non-uniform wear. To the contrary, when the crossing angle B is within the above-mentioned range, it is possible to facilitate the vulcanized molding while at the same time sufficiently keeping driving performance, and to effectively suppress non-uniform wear.

Additionally, the groove width W of the respective grooves 30, 31 (inclined portion 32) is preferably within the range of 0.3-10.0mm. The reason of this is as follows. In a case where the groove width W is less than 0.3 millimeter, the blades, which have been provided in the vulcanization mold for vulcanize molding, become thinner to be easily broken, so that the grooves 30, 31 are difficult to be formed by vulcanize forming. At the same time, each of the grooves 30, 31 does not adequately function as a water-escaping location, thereby lowering drainage performance. On the other hand, in a case where the groove width W exceeds 10.0mm, the area of the grooves 30, 31 occupied on an outer surface of the tread portion 13 is too large, whereby a negative ratio becomes larger. However, when the groove width W is within the above-mentioned range, it is possible to facilitate the vulcanize molding while at the same time securing drainage performance, and to adequately refrain the negative ratio.

Further, each of the above-mentioned grooves 30, 31 (inclined portion 32) is preferably formed as a sipe having the groove width W substantially uniform at any depth positions. In this state, the groove width W is within the range of 0.3-30mm. The reason of this is as follows. When the groove is formed as a sipe, the mutually-adjacent land portions 35 interfere with each other, whereby the leaning of the land portion 35 during driving can be suppressed. Accordingly, driving performance can be further improved, and also, drainage performance can be effectively improved.

When each of the groves 30, 31 is formed as a sipe as described above, a cross-sectional shape of the inclined portion 32 in the circumferential direction is inclined forwardly in the rotational direction while at the same time linearly extending the shape from the deepest point D toward the opening end K, as shown in FIGS. 3, 4. Accordingly, a structure of the blades provided in the vulcanization mold for vulcanize molding the inclined portion 32 of the grooves 30, 31 can be simplified, whereby the inclined portion 32 can be easily and accurately molded.

In addition, when each of the grooves 30, 31 is a sipe, for example, as shown in FIG. 5, the cross-sectional shape of the inclined portion 32 in the circumferential direction may not be linear in its entirety, but may linearly extend from the deepest point D toward somewhere between the deepest point D and the opening end K along the normal line H passing through the opening end K, incline forwardly in the rotational direction thereat, and linearly extend again. As a result, the shape may bend at least one point in this case, at one point between the deepest point D and the opening end K.

With this structure, when the land portion 35 is about to incline backwardly in a rotational direction, the forward and backward planes of the adjacent land portions 35 in the rotational direction may contact with each other in an engaged manner, thereby strongly suppressing the leaning of the land portion 35. In this way, the inclined portion 32 of the respective grooves 30, 31, in particular, the widthwise central line thereof may incline forwardly in the rotational direction from the deepest point D toward the opening end K in its entirety.

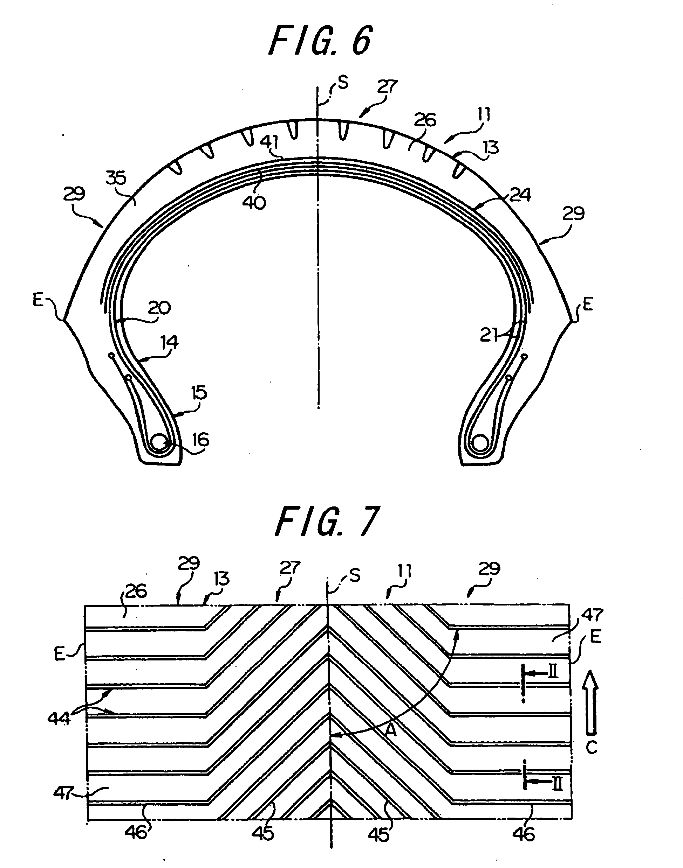

FIGS. 6, 7 show the second embodiment according to the present invention. The tire 11 according to the present embodiment is a pneumatic tire for a motorcycle front wheel having a designated rotational direction. The tire 11 includes the belt layers 24 consisting of at least two sheets, in this case, two sheets of inclined plies 40, 41. In each of the inclined plies 40, 41, there are embedded a number of reinforcing cords inclining at a predetermined angle with respect to the tire equator S and extending in parallel with each other. These reinforcing cords incline in opposite directions with respect to the tire equator S and cross each other between the two sheets of inclined plies 40, 41.

Here, as the reinforcing cord, organic fiber such as nylon, rayon, polyester or aromatic polyamide or steel may be employed. Noted that although in the first and second embodiments, the belt layer 24 is composed of one circumferential ply 25 or two inclined plies 40, 41 as described above, the belt layer 24 may be composed of two or more circumferential plies, three or more inclined plies, or laminated layers of one or more circumferential plies and one or more inclined plies.

Additionally, in the present embodiment, a plurality of grooves 44, in this case, sipes which are equally spaced apart from each other in the circumferential direction and in parallel to each other are formed on an outer surface of tread rubber 26 (tread portion 13). Each of the grooves 44 is composed of a chevron-shaped portion 45 which is disposed at a tread central portion 27 and bends in a chevron-shaped manner (reverse V-shaped) forwardly in the rotational direction, and inclined portions 45 which are disposed at the respective tread end portions 29 and extend from the respective width ends of the chevron-shaped portion 45 and incline at an inclination angle within the range of 45-90°, in this case, at the inclination angle A of 90° with respect to the tire equator S.

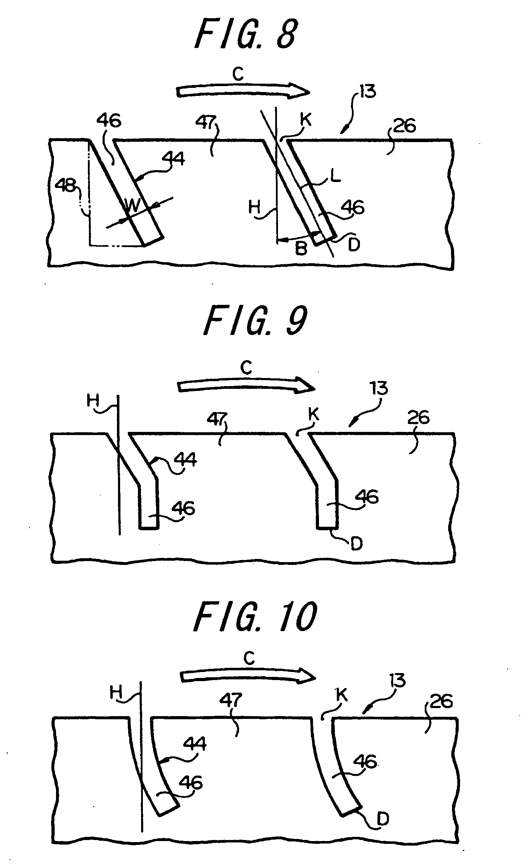

These inclined portions 46, in particular, the widthwise central lines inclines backwardly in the rotational direction from the deepest point D toward the opening end K while at the same time linearly extending on the circumferential cross-section, as shown in FIG. 8. Here, a vehicle body of a motor cycle inclines (pitches) in such a manner that a front tire thereof sinks down during braking, so the entire land portion 35 between the inclined portions 46 at a ground-contact area is about to leans forwardly in the rotational direction. However, a generally triangle support portion 48 which is formed at a front end of each land portion 47 in the rotational direction strongly resists the leaning, thereby effectively suppressing the leaning of each land portion 47. This improves braking performance while at the same time suppressing non-uniform wear. Furthermore, also in this tire, because a longitudinal groove is not an indispensable element, it is widely applicable.

On the other hand, when the motorcycle equipped with the tire 11 is decelerated while turning, the vehicle body inclines to a great extent. Accordingly, both lateral force and braking force affect the tread ends 29 of the tire 11. However, because the inclined portion 46 inclines at the inclination angle A within the range of 45-90° with respect to the tire equator S and the land portion 47 between the inclination portions 46 extends generally in the tire width direction, the tire 11 strongly resists the lateral force as described above. Furthermore, the inclined portion 46 inclines backwardly in the rotational direction from the deepest point D toward the opening end K, whereby the generally triangular support portion 48 formed at the front end of the land portion 47 positioning between the inclined portions 46 in the rotational direction strongly resists the leaning. Accordingly, it is possible to improve both turning performance and braking performance, and to secure sufficient gripping force in the above-mentioned case.

In addition, when each of the above-mentioned grooves 44 is formed as a sipe, for example, as shown in FIG. 9, a cross-sectional shape of the inclined portion 46in the circumferential direction may not be linear in its entirety, but may linearly extend from the deepest point D toward somewhere between the deepest point D and the opening end K along the normal line H passing through the opening end K, inclines backwardly in the rotational direction thereat, and linearly extend again toward the opening end K. Alternatively, as shown in FIG. 10, the groove 44 may also have an arcuate shape with a single curvature radius which is convex backwardly in the rotational direction, and may extend in parallel to the normal line H at the opening end K.

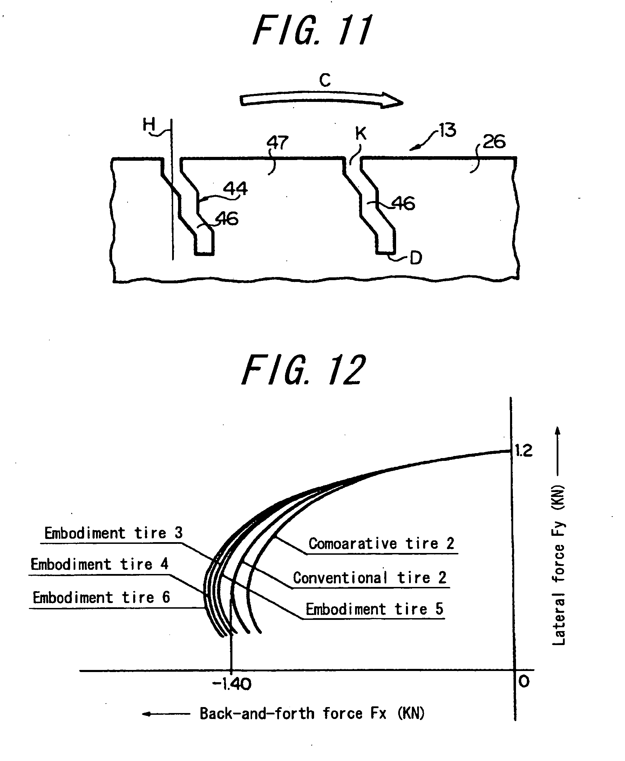

Alternatively, as shown in FIG. 11, the cross-sectional shape of the inclined portion 46 in the circumferential direction may linearly extend along the normal line H from the deepest point D toward the opening end K, and thereafter, a bent portion having a dog-leg shape which linearly extends while inclining backwardly in the rotational direction may be folded back two and half time toward the opening end K, and then, may linearly extend along the normal line H immediately before the opening end K. In this case where the cross-sectional shape has a waveform bent at four positions, when the land portion 47 is about to lean, the front and back planes in the rotational direction of the adjacent land portions 47 mutually contact with each other in an engaged manner. Accordingly, the leaning of the land portion 47 can be strongly suppressed. As described above, the inclined portion 46 of the groove 44 may incline backwardly in the rotational direction from the deepest point D toward the opening end K in its entirety. It should be noted that other structures and operations are same as those described with reference to the first embodiment.

Next, a first test example will be explained. In this test, there were prepared Conventional tire 1 in which the entire inclined portion extended in parallel to the normal line H passing through the opening end K on the circumferential cross-section and had the depth of 6mm; Embodiment tire 1 in which the entire inclined portion inclined at an inclination angle of 30° forwardly in the rotational direction toward the opening end K with respect to the normal line H on the circumferential cross-section and had the depth of 6mm, as shown in FIG. 3; Embodiment tire 2 in which the inclined portion linearly extended only by 3mm in parallel to the normal line H from the deepest point D toward the opening end K on the circumferential cross-section, and thereafter, linearly extended while inclining forwardly in the rotational direction, thereby reaching the opening end K while shifting only by 2mm forwardly in the rotational direction and had the depth of 6mm, as shown in FIG. 5; and Comparative tire 1 in which the entire inclined portion on the circumferential cross-section inclined at an inclination angle of 30° in a direction opposite to that of Embodiment tire 1 (backwardly in the rotational direction toward the opening end K) and had the depth of 6mm.

The size of each tire was 190/50ZR17. A carcass layer of each tire was formed by two carcass plies in which reinforcing cords composed of nylon, each crossing at angle of 80° with respect to the tire equator S were embedded. On the other hand, a belt layer was formed by one circumferential ply. The circumferential ply was formed by spirally winding, generally along the tire equator S, a strip where reinforcing elements composed of two steel filaments having a diameter of 0.3mm were twisted each other was embedded in coating rubber. Here, placement density of the reinforcing elements in this circumferential ply was 70 units/50mm.

Additionally, the thickness of tread rubber was uniformly 8mm from one tread end E to another tread end E. The tread width (distance between the tread ends E) was 240mm along the tread outer surface. Further, shapes (tread pattern) of each of four main grooves formed at the tread central portion and each of a plurality of grooves formed at tread-both-ends were the same, as shown in FIG. 2, and each depth of the grooves was uniformly 6mm. Each length in the width direction along the tread outer surface of the grooves of the both tread ends was 65mm, and the inclination angle A with respect to the tire equator S was 60°. In addition, each groove width W of the grooves at the both tread ends was 1.5mm, and the width of a land portion between the grooves was 6mm in the tread end E.

Next, each of the above-mentioned tires was inflated with internal pressure of 250 kPa, and mounted onto a sport-type motorcycle of 1,000 cm³ (cc) displacement. Because each of the tires was intended for a rear wheel, only a tire for a rear wheel of the motorcycle was replaced, and Conventional tire 1 was employed as a tire for a front wheel. Next, by use of such motorcycle, on a drizzling day (an amount of rain was stable and a wet state was substantially even all day long), an actual-vehicle running test was performed close to the maximum performance of the tire in only four laps to measure a lap time for each lap. Thereafter, an average lap time of the four laps was calculated. The results were as follows: 52.7 seconds, 51.8 seconds, 51.7 seconds, and 53.5 seconds in Conventional tire 1, Embodiment tires 1, 2 and Comparative tire 1, respectively. The embodiment tires were improved in wet performance thereof.

In addition, steering stability on a wet road surface of each tire was comprehensively evaluated by a skilled test driver. The results were as follows: 6 points, 8 points, 8 points, and 5 points in Conventional tire 1, Embodiment tires 1, 2 and Comparative tire 1, respectively. Here, because the tread pattern at the tread central portion of each tire was same, the above-mentioned difference is considered to be attributed to the inclination of the groove (inclined portion) at the both tread ends.

The driver reported the following comments on the test. Conventional tire 1 had a low grip level at the time of opening a throttle at an acceleration stage from a corner where a vehicle body had been greatly banked. Additionally, each of Embodiment tires 1, 2 improved in its grip level at the time of opening the throttle at an acceleration stage from a corner where the vehicle body was greatly banked. Comparative tire 1 had a slightly better feeling about its braking during being banked, when traction force was applied well. However, at an acceleration stage from a corner where the vehicle body was banked to a greater extent than that, the grip level of Comparative tire 1 was greatly reduced at the time of opening the throttle. When the traction force was applied, the tire slipped to spin free.

Next, a second test example will be explained. In this test, there were prepared Conventional tire 2 whose entire inclined portion extended in parallel to the normal line H passing through the opening end K on the circumferential cross-section and whose depth was 6mm; Embodiment tire 3, as shown in FIG. 8, whose entire inclined portion inclined at an inclination angle B of 25° backwardly in the rotational direction toward the opening end K with respect to the normal line H on the circumferential cross-section and whose depth was 6mm; Embodiment tire 4, as shown in FIG. 9, whose inclined portion extended only by 3mm in parallel to the normal line H from the deepest point D toward the opening end K on the circumferential cross-section, and thereafter, extended while inclining backwardly in the rotational direction, thereby reaching the opening end K while shifting only by 2mm backwardly in the rotational direction, and whose depth was 6mm throughout it; and Embodiment tire 5, as shown in FIG. 10, whose inclined portion extended in parallel to the normal line H at the opening end K while exhibiting an arcuate shape with a single curvature radius, which became convexly shaped backwardly in the rotational direction, whose depth was 6 mm, and where the opening end K shifted only by 2 mm backwardly in the rotational direction from the deepest point D.

Further, in this test, in addition to the above-mentioned tires, there were prepared Embodiment tire 6, as shown in FIG. 11, whose inclined portion linearly extended only by 1.2 mm along the normal line H from the deepest point D toward the opening end K on the circumferential cross-section, and thereafter, linearly extended while inclining backwardly in the rotational direction, thereby shifted by 1.0 mm backwardly in the rotational direction, and at the same time, whose bent portion with a dog-leg shape approaching the opening end K only by 1.2 mm was folded back two and half times toward the opening end K, and whose depth was 6 mm, and where the opening end K shifted only by 2 mm backwardly in the rotational direction; and Comparative tire 2 whose entire inclined portion on the circumferential cross-section inclined at an inclination angle of 25° in a direction opposite to that of Embodiment tire 3 (i.e., forwardly in the rotational direction) and whose depth was 6 mm.

Here, the size of each tire was 120/60R17. A carcass layer of each tire was formed by two carcass plies in which reinforcing cords composed of nylon having a crossing angle of 80° with respect to the tire equator S were embedded. On the other hand, the belt layer was formed by two inclined plies in which reinforcing cords having the diameter of 0.7 mm and formed by twisting aromatic polyamide filament were embedded such that respective reinforcing cords of the two inclined plies were inclined in opposite directions with respect to the tire equator S. The reinforcing cords in the inner inclined plies were inclined at an angle of 33° in a diagonally left up with respect to the tire equator S. The reinforcing cords in the outer inclined plies were inclined at an angle of 33° in a diagonally right up with respect to the tire equator S. Additionally, placement density of the respective reinforcing cords in these inclined plies was 50 units/50 mm.

In addition, the thickness of tread rubber was uniformly 8 mm from one tread end E to the other tread end. The tread width (distance between the tread ends E) was 150 mm along a tread outer surface. Further, a tread pattern of each tire was same as that shown in FIG. 7, and was provided with a plurality of grooves including chevron-shaped portions at a tread central portion and inclined portions at both tread end portions in the circumferential direction while being equally spaced apart from each other. The grooves had the depth of uniform 6 mm and the inclination angle A of the chevron-shaped portion with respect to the tire equator S of 45°. The inclination angle A of the inclined portion with respect to the tire equator S was 90°. The widthwise length of the respective inclined portions along an outer surface of the tire was 40 mm. Additionally, the groove width W of the respective grooves was 0.7 mm, and the width of a land portion between the grooves was 10 mm at the tread end E.

Next, the respective tires were inflated with internal pressure of 250 kPa, and then pressed onto a dry running surface of a flat-belt test machine at a camber angle of 40° and with a load of 1.5 kN while running at 50 km/h. In this state, back-and-forth force Fx and lateral force Fy were measured while gradually increasing a slip ratio in a braking direction from 0 % to 30 %. The results were shown in FIG. 12 where a lateral axis thereof was defined as the back-and-forth force Fx, a longitudinal axis thereof as the lateral force Fx.

In FIG. 12, a point where the back-and-forth force Fx is "0" on the lateral axis corresponds to a point where the tire rolling contact with the surface at a slip ratio of 0%. As the slip ratio gradually increases, a negative component of the back-and-forth force Fx increases, whereas the lateral force Fy also gradually decreases. A point where the above-mentioned negative component of the back-and-forth force Fx became a maximum value has been considered as marginal performance of a brake. In Conventional tire 2, a maximum value of the negative component was -1.40 kN. Here, when the maximum value of Conventional tire 2 was indexed to 100.0, the maximum values of other tires were 102.4, 102.8, 102.1, 103.1, and 98.5 in Embodiment tires 3, 4, 5, 6 and Comparative tire 2, respectively. The embodiment tires were improved in the marginal performance of its braking by 2-3%.

Next, each of the above-mentioned tires was mounted onto a sport-typed motorcycle of 1,000 cm³ (cc) displacement. Because each of the tires was intended for a front wheel, only a tire for a front wheel of a motorcycle was replaced, and Conventional tire 2 was employed as a tire for a rear wheel. Next, by use of such motorcycle, on a drizzling day (an amount of rain was stable and a wet state was substantially even all day long), an actual-vehicle running test was performed close to the maximum performance of the tire in only four laps to measure a lap time for each lap. Thereafter, an average lap time of the four laps was calculated. The results were as follows: 52.7 seconds, 51.7 seconds, 51.8 seconds, 51.4 seconds, 51.0 seconds, and 53.3 seconds in Conventional tire2; Embodiment tires 1, 2, 3, 4, 5, 6; and Comparative tire 2, respectively. The embodiment tires were improved in wet performance thereof.

In addition, steering stability on a wet road surface of each tire was comprehensively evaluated by a skilled test driver. The results were as follows: 6 points, 8 points, 8 points, 8 points, 9 points, and 4 points in Conventional tire 2; Embodiment tires3, 4, 5, 6; and Comparative tire 2, respectively. Here, because the tread pattern at the tread central portion of each tire was same, the above-mentioned difference is considered to be attributed to the inclination of the groove (inclined portion) at the both tread ends.

The driver reported the following comments on the test. Comparative tire 2 exhibited a feeling of weakness at the tread, when a brake was applied during straight running. Comparative tire 2 exhibited a feeling that a limit thereof would come close also in applying a brake while banking a vehicle body. Additionally, each of Embodiment tires 3, 4 and 5 exhibited a feeling that its braking performance was favorable, and accordingly, it was possible to strongly apply a braking. When the vehicle body was banked while applying a braking, Embodiment tire 6 further exhibited grip force slightly higher than the third embodiment tire, although substantially same as that of Embodiment tire 3. Embodiment tire 6 was best among these tires. In addition, Comparative tire 2 had weakness in rigidity. Comparative tire 2 exhibited a feeing to move in a squishy manner, and furthermore, slipped on a wet road surface. Grip force of the second comparative tire declined.

### INDUSTRIAL APPLICABILITY

The present invention can be applied to an industrial field of a pneumatic tire for a motorcycle.

## Claims

1. A pneumatic tire (11) for a rear wheel of a motorcycle in which a plurality of grooves (30, 31) each having an inclined portion (32) inclined at an inclination angle A within the range of 45-90° with respect to a tire equator S are formed on an outer surface of a tread portion (13) and a tire rotational direction is designated, **characterized in that** as viewed in a circumferential cross-section with respect to the inclined portion of the respective grooves, the inclined portion on the circumferential cross-section is generally inclined forwardly in the rotational direction from a deepest point D toward an opening end K, and the respective grooves are formed as sipes having substantially the same groove width at any depth position.

2. A pneumatic tire (11) for a front wheel of a motorcycle in which a plurality of grooves 44 each having an inclined portion (46) inclined at an inclination angle A within the range of 45-90° with respect to a tire equator S are formed on an outer surface of a tread portion and a tire rotational direction is designated, **characterized in that** as viewed in a circumferential cross-section with respect to the inclined portion of the respective grooves, the inclined portion on the circumferential cross-section is generally inclined backwardly in the rotational direction from a deepest point D toward an opening end K, and the respective grooves have substantially the same groove width at any depth position.

3. The pneumatic tire for a motorcycle according to claim 1 or 2, wherein the inclined portion is placed at a tread end portion (19).

4. The pneumatic tire for a motorcycle according to any one of claims 1-3, wherein a crossing angle B between a strait line L connecting the deepest point D to the opening end K of the inclined portion and a normal line H passing through the opening end K of the incline portion is within the range of 5-40°.

5. The pneumatic tire for a motorcycle according to any one of claims 1-4, wherein the groove has a groove width W within the range of 0.3-10.0 mm.

6. The pneumatic tire for a motorcycle according to any preceding claim, wherein a shape of the circumferential cross-section linearly extends from the deepest point D to the opening end K.

7. The pneumatic tire for a motorcycle according to any preceding claim, wherein the shape of the circumferential cross-section bends at one or more positions somewhere between the deepest point D and the opening end K.

8. A combination of pneumatic tires (11) for front and rear wheels of a motorcycle in which a plurality of grooves (30, 31, 44) each having an inclined portion (32, 46) inclined at an inclination angle A within the range of 45-90° with respect to a tire equator S are formed on an outer surface of a tread portion (13) and a tire rotational direction is designated, wherein
as viewed in a circumferential cross-section with respect to the inclined portion of the respective grooves, the inclined portion (46) of the front tire on the circumferential cross-section is generally inclined backwardly in the rotational direction from a deepest point D toward an opening end K, and wherein
as viewed in a circumferential cross-section with respect to the inclined portion of the respective grooves, the inclined portion (32) of the rear tire on the circumferential cross-section is generally inclined forwardly in the rotational direction from a deepest point D toward an opening end K.

## Patentansprüche

1. Luftreifen (11) für ein Hinterrad eines Motorrades, bei dem mehrere Rillen (30, 31), die jeweils einen geneigten Abschnitt (32) haben, der mit einem Neigungswinkel A innerhalb des Bereichs von 45-90° in Bezug auf einen Reifenäquator S geneigt ist, auf einer Außenfläche eines Laufflächenabschnitts (13) geformt sind und eine Reifenrotationsrichtung ausgewiesen ist, **dadurch gekennzeichnet, dass,** gesehen in einem umlaufenden Querschnitt in Bezug auf den geneigten Abschnitt der jeweiligen Rillen, der geneigte Abschnitt auf dem umlaufenden Querschnitt im Allgemeinen in der Rotationsrichtung von einem tiefsten Punkt D zu einem Öffnungsende K hin nach vom geneigt ist und die jeweiligen Rillen als Lamellen geformt sind, die im Wesentlichen an jeder Tiefenposition dieselbe Rillentiefe haben.

2. Luftreifen (11) für ein Vorderrad eines Motorrades, bei dem mehrere Rillen (44), die jeweils einen geneigten Abschnitt (46) haben, der mit einem Neigungswinkel A innerhalb des Bereichs von 45-90° in Bezug auf einen Reifenäquator S geneigt ist, auf einer Außenfläche eines Laufflächenabschnitts geformt sind und eine Reifenrotationsrichtung ausgewiesen ist, **dadurch gekennzeichnet, dass,** gesehen in einem umlaufenden Querschnitt in Bezug auf den geneigten Abschnitt der jeweiligen Rillen, der geneigte Abschnitt auf dem umlaufenden Querschnitt im Allgemeinen in der Rotationsrichtung von einem tiefsten Punkt D zu einem Öffnungsende K hin nach hinten geneigt ist und die jeweiligen Rillen im Wesentlichen an jeder Tiefenposition dieselbe Rillentiefe haben.

3. Luftreifen für ein Motorrad nach Anspruch 1 oder 2, wobei der geneigte Abschnitt an einem Laufflächen-Endabschnitt (19) angeordnet ist.

4. Luftreifen für ein Motorrad nach einem der Ansprüche 1 bis 3, wobei ein Schnittwinkel B zwischen einer geraden Linie L, die den tiefsten Punkt D mit dem Öffnungsende K des geneigten Abschnitts verbindet, und einer senkrechten Linie H, die durch das Öffnungsende K des geneigten Abschnitts hindurchgeht, innerhalb des Bereichs von 5-40° liegt.

5. Luftreifen für ein Motorrad nach einem der Ansprüche 1 bis 4, wobei die Rille eine Rillenbreite W innerhalb des Bereichs von 0,3-10,0 mm hat.

6. Luftreifen für ein Motorrad nach einem der vorhergehenden Ansprüche, wobei sich eine Form des umlaufenden Querschnitts linear von dem tiefsten Punkt D bis zu dem Öffnungsende K erstreckt.

7. Luftreifen für ein Motorrad nach einem der vorhergehenden Ansprüche, wobei sich die Form des umlaufenden Querschnitts an einer oder mehreren Positionen irgendwo zwischen dem tiefsten Punkt D und dem Öffnungsende K biegt.

8. Kombination von Luftreifen (11) für Vorder- und Hinterräder eines Motorrades, bei denen mehrere Rillen (30, 31, 44), die jeweils einen geneigten Abschnitt (32, 46) haben, der mit einem Neigungswinkel A innerhalb des Bereichs von 45-90° in Bezug auf einen Reifenäquator S geneigt ist, auf einer Außenfläche eines Laufflächenabschnitts (13) geformt sind und eine Reifenrotationsrichtung ausgewiesen ist, wobei,
gesehen in einem umlaufenden Querschnitt in Bezug auf den geneigten Abschnitt der jeweiligen Rillen, der geneigte Abschnitt (46) des Vorderreifens auf dem umlaufenden Querschnitt im Allgemeinen in der Rotationsrichtung von einem tiefsten Punkt D zu einem Öffnungsende K hin nach hinten geneigt ist und wobei,
gesehen in einem umlaufenden Querschnitt in Bezug auf den geneigten Abschnitt der jeweiligen Rillen, der geneigte Abschnitt (32) des Hinterreifens auf dem umlaufenden Querschnitt im Allgemeinen in der Rotationsrichtung von einem tiefsten Punkt D zu einem Öffnungsende K hin nach vom geneigt ist.

## Revendications

1. Bandage pneumatique (11) pour une roue arrière d'un motocycle, dans lequel plusieurs rainures (30, 31), comportant chacune une partie inclinée (32) inclinée à un angle d'inclinaison A compris dans l'intervalle allant de 45 à 90° par rapport à un équateur S du bandage pneumatique, sont formées sur une surface externe d'une partie de bande de roulement (13), une direction de rotation du bandage pneumatique étant désignée, **caractérisé en ce que,** vue dans une section transversale circonférentielle par rapport à la partie inclinée des rainures respectives, la partie inclinée sur la section transversale circonférentielle est en général inclinée vers l'avant dans la direction de rotation, du point le plus profond D vers une extrémité d'ouverture K, les rainures respectives étant formées sous forme de lamelles ayant pratiquement la même largeur de rainure au niveau d'une quelconque position de profondeur.

2. Bandage pneumatique (11) pour une roue avant d'un motocycle, dans lequel plusieurs rainures (44), comportant chacune une partie inclinée (46) inclinée à un angle d'inclinaison A compris dans l'intervalle allant de 45 à 90° par rapport à un équateur S du bandage pneumatique, sont formées sur une surface externe d'une partie de bande de roulement, une direction de rotation du bandage pneumatique étant désignée, **caractérisé en ce que,** vue dans une section transversale circonférentielle par rapport à la partie inclinée des rainures respectives, la partie inclinée sur la section transversale circonférentielle est en général inclinée vers l'arrière dans la direction de rotation, du point le plus profond D vers une extrémité d'ouverture K, les rainures respectives ayant pratiquement la même largeur de rainure au niveau d'une quelconque position de profondeur.

3. Bandage pneumatique pour un motocycle selon les revendications 1 ou 2, dans lequel la partie inclinée est agencée au niveau d'une partie d'extrémité de la bande de roulement (19).

4. Bandage pneumatique pour un motocycle selon l'une quelconque des revendications 1 à 3, dans lequel un angle de croisement B entre une ligne droite L connectant le point le plus profond D à l'extrémité d'ouverture K de la partie inclinée, et une ligne normale H passant à travers l'extrémité d'ouverture K de la partie inclinée, est compris dans l'intervalle allant de 5 à 40°.

5. Bandage pneumatique pour un motocycle selon l'une quelconque des revendications 1 à 4, dans lequel la rainure a une largeur de rainure W comprise dans l'intervalle allant de 0,3 à 10,0 mm.

6. Bandage pneumatique pour un motocycle selon l'une quelconque des revendications précédentes, dans lequel une forme de la section transversale circonférentielle s'étend de manière linéaire du point le plus profond D vers l'extrémité d'ouverture K.

7. Bandage pneumatique pour un motocycle selon l'une quelconque des revendications précédentes, dans lequel la forme de la section transversale circonférentielle est fléchie au niveau d'une ou de plusieurs positions, situées entre le point le plus profond D et l'extrémité d'ouverture K.

8. Combinaison de bandages pneumatiques (11) pour les roues avant et arrière d'un motocycle, dans lequel plusieurs rainures (30, 31, 44), comportant chacune une partie inclinée (32, 46) inclinée à un angle d'inclinaison A compris dans l'intervalle allant de 45 à 90° par rapport à un équateur S du bandage pneumatique, sont formées sur une surface externe d'une partie de bande de roulement (13), une direction de rotation du bandage pneumatique étant désignée, dans laquelle,
vue dans une section transversale circonférentielle par rapport à la partie inclinée des rainures respectives, la partie inclinée (46) du bandage pneumatique avant sur la section transversale circonférentielle est en général inclinée vers l'arrière dans la direction de rotation, du point le plus profond D vers une extrémité d'ouverture K, et dans laquelle
vue dans une section transversale circonférentielle par rapport à la partie inclinée des rainures respectives, la partie inclinée (32) du bandage pneumatique arrière sur la section transversale circonférentielle est en général inclinée vers l'avant dans la direction de rotation, du point le plus profond D vers une extrémité d'ouverture K.
